**Europäisches Patentamt**

(19) **European Patent Office**

**Office européen des brevets**

(11) Numéro de publication: **0 145 544**
**B1**

(12) **FASCICULE DE BREVET EUROPEEN**

(45) Date de publication du fascicule du brevet:
**03.06.87**

(21) Numéro de dépôt: **84402232.7**

(22) Date de dépôt: **07.11.84**

(51) Int. Cl.⁴: **A 23 L 3/36**

(54) Procédé et appareil de préparation de particules de produits alimentaires congelés.

(30) Priorité: **07.11.83 AU 2246/83**

(43) Date de publication de la demande:
**19.06.85 Bulletin 85/25**

(45) Mention de la délivrance du brevet:
**03.06.87 Bulletin 87/23**

(84) Etats contractants désignés:
**AT BE CH DE FR GB IT LI LU NL SE**

(56) Documents cités:
**FR - A - 1 596 364**
**FR - A - 2 022 001**
**FR - A - 2 259 545**
**FR - A - 2 334 926**
**FR - A - 2 388 509**
**FR - A - 2 416 649**
**FR - A - 2 463 585**
**FR - A - 2 489 662**
**FR - A - 2 489 663**
**GB - A - 1 264 439**
**GB - A - 1 376 972**
**GB - A - 2 117 222**
**US - A - 2 527 493**
**US - A - 3 030 214**
**US - A - 3 246 993**
**US - A - 3 498 069**

(73) Titulaire: **L'AIR LIQUIDE, SOCIETE ANONYME POUR L'ETUDE ET L'EXPLOITATION DES PROCEDES GEORGES CLAUDE, 75, Quai d'Orsay, F-75321 Paris Cedex 07 (FR)**

(72) Inventeur: **Vitkovsky, Eugène Charles, 17 Mitchell Road, Alexandria 2015, New South Wales (AU)**

(74) Mandataire: **Bouton Neuvy, Liliane et al, L'Air liquide, Société Anonyme pour L'Etude et L'Exploitation des Procédés Georges Claude 75, Quai d'Orsay, F-75321 Paris Cedex 07 (FR)**

(56) Documents cités: (suite)
**US - A - 3 619 205**
**US - A - 4 031 261**
**US - A - 4 193 272**
**US - A - 4 195 489**

**RESEARCH DISCLOSURE, no. 135, July 1975, page 4, no. 13504; "Extrusion freezing of materials such as food"**

## Description

L'invention concerne un procédé et les appareils permettant de préparer des particules congelées de produits alimentaires s'écoulant aisément. L'un des domaines d'application éventuels, mais dans lequel la présente invention n'est pas limitée est celui de la préparation de particules de produits alimentaires congelées, à haute fluidité, destinées à être ajoutées à, ou déposées sur des produits alimentaires traités ou non traités, comme par exemple le dépôt sur une base de gâteau ou de pâtisserie moulée à l'avance ou, par exemple, l'addition de ces particules à des plats préparés, crèmes glacées, desserts ou autres préparations gastronomiques. En variante, le produit en particules peut être conditionné à l'état congelé sous forme d'un produit final lui-même vendu à l'intention des particuliers et des consommateurs industriels ou commerciaux.

L'utilisation de produits congelés pour garniture à haute fluidité, destinés à être déposés sur un fond de gâteau ou de pâtisserie moulé à l'avance peut apporter de nombreux avantages par rapport aux méthodes habituelles. Par exemple, la pratique commerciale courante dans la préparation de pizzas congelées consiste à produire et à traiter des garnitures à chaud ou réfrigérées. Ces garnitures sont généralement composées de sauce tomate, fromage coupé en cubes ou paillettes, jambon en cubes, ananas, champignons, salami, viande hachée, etc. Ces garnitures sont confectionnées à partir de matières premières ou de produits traités que l'on peut trouver dans le commerce. Ces produits sont généralement déposés sur un fond de pizza, sous forme congelée ou à chaud.

Un inconvénient de la méthode actuelle est que ces garnitures doivent être élaborées à partir de produits chers et de qualité relativement supérieure et, par suite, elles constituent une part importante du coût total du produit fini. Dans de nombreux cas, les propriétés des produits ne peuvent être modifiées que dans un degré limité et non au point de parvenir à un niveau optimum. Par exemple, les produits râpés, en cubes ou en tranches ne coulent relativement pas étant donné qu'il sont ordinairement collants ou gluants et qu'il est par suite difficile de les répartir avec précision. De même, certains fruits ou légumes en cubes ou en tranches perdent de l'humidité aux températures de manipulation habituelles et peuvent être détrempés ou saturés d'eau en conservant mal leur coloris, ce qui leur donne un aspect peu agréable et peu appétissant. En outre, un grand nombre de garnitures ne peuvent être conservées que pendant un temps limité, de l'ordre de quelques jours, à la température de la glace. Ceci signifie que le fabricant ne peut souvent profiter des variations de prix du marché en achetant des matières premières au prix minimum.

Par la demande de brevet français 2 489 663 on connaît un procédé consistant à durcir des œufs cuits entre −1°C et −5°, 5°C afin de pouvoir les découper sans produire de fines.

D'autre part, le brevet britannique 1 264 439 concerne un procédé permettant d'obtenir des particules congelées ayant des formes irrégulières du type «pop-corn», à partir d'œuf cru ou de produit laitier semi-liquide. Selon cette méthode, on envoie le produit semi-liquide, sous une forme injectée par l'intermédiaire d'une buse dans un gaz liquéfié à une température inférieure à −101°C. Et, selon le brevet britannique 1 376 972, l'alimentation se fait sous forme de globules de produit semi-liquide, les dits globules étant congelés dans un liquide cryogénique.

L'un des objets de la présente invention est de réaliser un procédé et un appareil permettant de confectionner un produit alimentaire congelé à haute fluidité dont la granulométrie est de l'ordre de quelques millimètres, susceptible d'être utilisé sous forme d'un produit final commercialisable intrinsèquement ou dans une préparation alimentaire comportant des avantages sur les procédés de préparation alimentaires utilisés jusqu'ici.

Le procédé consiste en l'alimentation en matière première alimentaire de consistance visqueuse ou semi-solide et en la congélation de celui-ci par échange direct avec une substance cryogénique.

Selon l'invention le produit alimentaire de consistance pâteuse visqueuse ou semi-solide est d'abord préparé par extrusion en fragments ayant une dimension minimale comprise entre 5 et 50 millimètres, et de préférence entre 10 et 15 millimètres, puis le produit alimentaire ainsi préparé est congelé au coeur des fragments par échange direct avec une substance cryogénique à une température suffisamment basse pour assurer la fragilisation des dits fragments, ensuite les fragments congelés ainsi fragilisés sont soumis à une opération de fractionnement, et à un tamisage pour recueillir les particules ayant une granulométrie comprise entre 5 et 12 millimètres, de préférence entre 8 et 12 millimètres.

Le produit alimentaire est délivré, de préférence à un débit contrôlé et sa surface est contrôlée de manière à permettre l'exécution de la phase de congélation du produit fourni à une vitesse prédéterminée.

La phase de congélation du produit est réalisée de préférence par échange thermique direct entre le produit et une substance cryogénique, bien qu'il soit aussi possible, selon l'invention, d'utiliser un échange thermique indirect, comme par exemple en mettant le produit alimentaire en contact avec une surface à basse température, la température de la surface étant abaissée en mettant la face opposée en contact avec une substance cryogénique.

Dans le procédé d'échange thermique direct préféré, il est possible de faire appel à plusieurs manières pour réaliser l'échange thermique en question. Par exemple, la phase de congélation du produit alimentaire peut consister à immerger le produit dans un bain de substance cryogénique liquide telle que de l'azote liquide, afin ainsi de congeler le produit alimentaire. En variante, la phase de congélation peut comprendre la pulvérisation d'une substance cryogénique en contact direct avec le produit alimentaire, au fur et à mesure qu'il passe au travers ou qu'il est maintenu dans une zone de congélation. Dans une autre variante possible, la phase de congélation peut consister à déposer le produit sur une substance cryogénique solide, telle que par exemple un lit de glace sèche, afin de congeler ainsi ledit produit alimentaire.

La température atteinte par le produit au cours de la phase de congélation est, de préférence, supérieure à la température au-dessous de laquelle la cohésion naturelle du produit est insignifiante par rapport à la force de cohésion produite par la cristallisation. Ceci a pour but d'empêcher que le produit congelé ne soit excessivement cassant ou friable.

La phase de fragmentation du produit congelé est réalisée de préférence de manière à obtenir des particules à haute fluidité d'un produit alimentaire congelé dont la granulométrie est inférieure à une taille maximale prédéterminée. Le procédé comprend en outre, de préférence, une phase de calibrage des particules à haute fluidité dudit produit congelé de manière à séparer les fines des particules de plus grande dimension, exigées pour former le produit alimentaire final en particules. Les fines peuvent être recyclées afin de compléter le produit alimentaire approvisionné initialement.

La présente invention fournit également un appareil servant à préparer des particules alimentaires congelées, à haute fluidité, à partir d'un produit alimentaire approvisionné initialement, ledit appareil comprenant: un dispositif de congélation permettant de congeler le produit alimentaire en question à une température à laquelle celui-ci soit à l'état cassant, et un dispositif de fractionnement destiné à fractionner le produit alimentaire congelé, cassant venant du dispositif de congélation, de manière à produire des particules de produit alimentaire congelé à haute fluidité.

Si le produit alimentaire en question a une consistance visqueuse ou semi-solide, l'appareil comprend, de préférence, un dispositif d'alimentation composé d'une extrudeuse pour extruder le produit alimentaire visqueux par une ouverture au moins, ledit produit extrudé au sortir de la ou des ouvertures étant acheminé vers le dispositif de congélation. L'extrudeuse peut comporter commodément une plaque à orifice au travers de laquelle le produit alimentaire est refoulé, le ou les orifices pratiqués dans la plaque ayant un diamètre de l'ordre de 5 à 25 mm.

L'appareil peut comprendre en outre un élément de stockage temporaire destiné à recevoir le produit alimentaire congelé à la sortie du dispositif de congélation, et un dispositif d'alimentation associé audit élément de stockage temporaire, agissant de manière à alimenter le produit congelé du stockage au dispositif de fractionnement à un débit contrôlé.

Dans une forme de réalisation possible, le dispositif de fractionnement comprend un broyeur de fractionnement comportant une cuve, où les parois internes et le noyau sont situés à l'intérieur, ledit noyau pouvant effectuer un mouvement relatif dans la cuve de manière à broyer le produit alimentaire congelé dans l'espace compris entre le noyau et les parois internes. Dans ce cas, la cuve peut être dotée d'une pluralité d'orifices de taille prédéterminée, au travers desquels les particules de produit alimentaire congelées et fractionnées sont évacuées ce qui permet ainsi de retenir les particules de surdimension du produit alimentaire congelé dans l'espace situé à l'intérieur du broyeur. L'intervalle minimum de séparation prédéterminé entre la surface extérieure du noyau et les parois internes de la cuve est, de préférence, maintenu à tout moment pendant le mouvement relatif du noyau à l'intérieur de la cuve afin que le produit congelé se trouvant dans cet espace ne soit pas broyé en particules de taille indésirable.

Les particules de produit congelé fractionné provenant du dispositif de fractionnement peuvent être acheminées vers un jeu d'orifices de calibrage agissant de manière à séparer les particules de tailles insuffisante des particules de taille plus grande, destinées à constituer les particules finales à haute fluidité du produit alimentaire congelé.

Le procédé et les appareils conformes aux différentes formes de réalisation préférées possibles sont maintenant décrits d'une façon plus détaillée, en partie en combinaison avec la planche de croquis joints où:

La Fig. 1 est un schéma fonctionnel d'un procédé préféré de préparation de particules congelées à haute fluidité de produit alimentaire, conforme à l'invention,

la Fig. 2 est une représentation schématique d'une forme de réalisation possible d'un appareil conforme à l'invention,

la Fig. 3 est une vue schématique du dispositif de fractionnement et de calibrage faisant partie de l'appareil préféré, objet de la présente invention.

Le produit à traiter conformément au procédé ou à l'appareil faisant l'objet de l'invention peut être choisi parmi une vaste gamme de produit alimentaires. Le produit peut être constitué de matières à l'état semi-solide, trop molles pouvoir être coupées ou susceptibles de couler sous une pression excessive quand on les manipule par les méthodes habituelles. Ces produits semi-solides comprennent les fruits mous, la margarine et le fromage traité. En outre, on peut citer la pulpe des fruits, les fruits dans leur jus, les produits laitiers semi-solides.

Le procédé et l'appareil de la présente invention peuvent également être utilisés pour le traitement des fractions alimentaires les plus fines des sous-produits d'autres procédés que l'on avait souvent négligés jusqu'ici. Ces produits peuvent être traités conformément à l'invention par addition d'un agent mouillant ou mélangeable à un porteur liquide et acheminés ensuite sous forme d'un produit alimentaire prévu pour le procédé ou l'appareil en question, soit individuellement, soit en mélange avec d'autres produits à traiter. Par exemple, les fines d'aliments et les très petites particules produites lors de la préparation d'une garniture pour pizzas peuvent être recyclées avec addition d'une petite quantité d'eau ou par mélange de fromage traité à chaud, afin d'être mélangées aux autres produits de départ.

Un autre type de produit alimentaire susceptible d'être utilisé comme produit de départ est composé d'agglomérés ou de fragments de produits mous et collants tels que par exemple des fragments de fromage mou, bacon, etc.

On comprendra que le produit alimentaire à traiter peut être acheminé sous forme naturelle ou avec addition, par exemple, d'épaississants, de stabilisants, d'eau, d'huile, de diluants, de produits de conservation ou colorants ou d'autres produits alimentaires.

Pour résumer, le produit alimentaire initial peut être sous forme pâteuse ou semi-solide. Il peut être composé d'un seul élément ou d'un certain nombre d'éléments, mélangés ensemble. Par exemple, ce peut être un produit pâteux ou semi-solide additionné de particules solides de même produit ou d'autres produits mélangés.

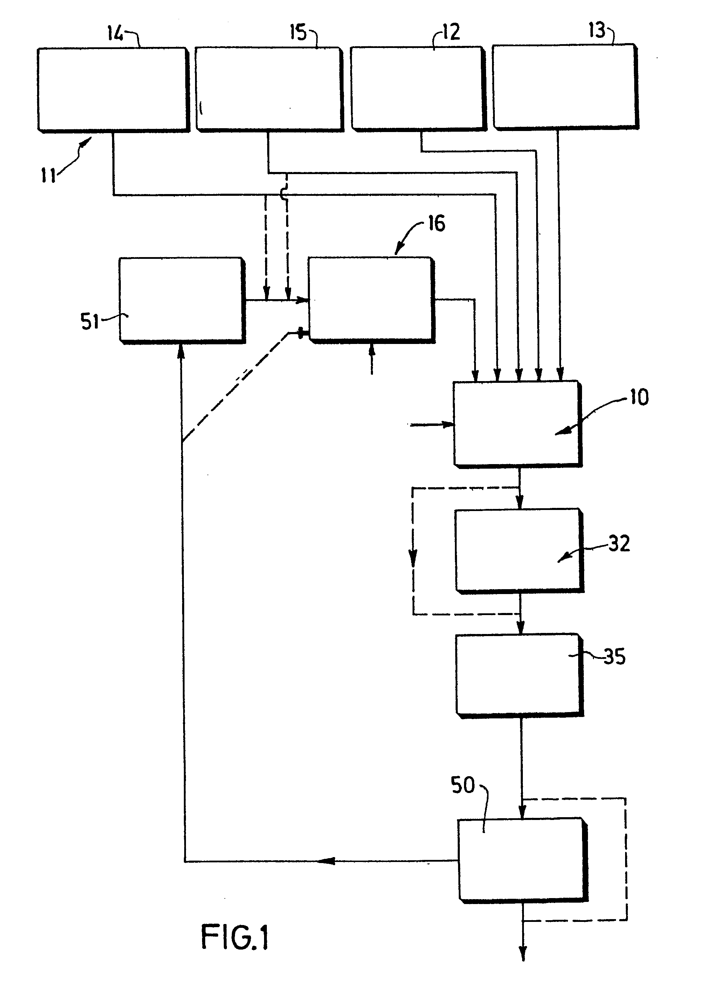

L'acheminement du produit alimentaire destiné à la première phase de congélation du procédé ou au dispositif de congélation 10 de l'appareil peut être réalisé de n'importe quelle manière adéquate. Suivant la figure 1, par exemple, les produits alimentaires de départ peuvent provenir d'un dispositif de stockage 11, tel que trémies 12, 13 (pour les produits solides) ou cuves 14, 15 (pour les produits semi-solides, semi-liquides ou liquides). Le produit fourni par le dispositif de stockage 11 peut traverser au mieux un étage de mélangeage 16 où des adjuvants ou autres produits alimentaires sont ajoutés au produit. Le mélangeage des adjuvants ou autres produits alimentaires peut être réalisé par n'importe quelle manière classique appropriée en utilisant des techniques ou des procédés connus.

Le transfert du produit alimentaire vers l'étage de congélation 10 s'effectue à débit contrôlé, en fonction de la capacité de l'étage de congélation 10. Le procédé et l'appareil peuvent être adaptés pour fonctionner en continu ou par charges. De même, le transfert des produits alimentaires vers l'étage de congélation 10 s'effectue de manière à contrôler la surface du produit acheminé vers l'étage de congélation 10 de manière à effectuer cette congélation à un débit prédéterminé. La vitesse de congélation dépendra en partie de la surface du produit alimentaire étant donné que celle-ci a un effet sur la capacité d'échange thermique lors de la congélation. Par exemple, il est utile d'éviter de gros fragments agglomérés ou grumeaux de produit alimentaire, susceptibles de congeler excessivement les couches extérieures en ne permettant qu'une congélation insuffisante au coeur des fragments.

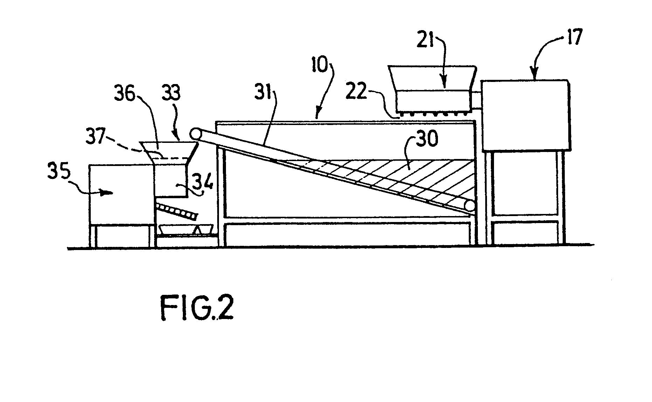

L'appareil objet de la présente invention, illustré sur la figure 2, comprend un dispositif d'alimentation 17 pour acheminer le produit alimentaire au dispositif de congélation 10.

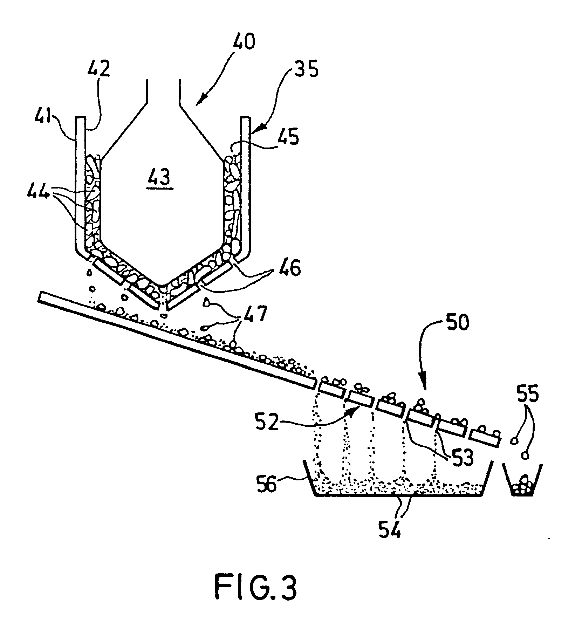

Si l'on se réfère à la Fig. 2 où le produit alimentaire est d'une consistance visqueuse ou peut être considéré comme semi-solide, le dispositif d'alimentation 17 comprend une extrudeuse 21 destinée à extruder le produit alimentaire visqueux dans une pluralité d'orifices d'où le produit sort et est amené dans le dispositif de congélation 10. L'extrudeuse peut inclure une plaque à orifices 22, illustrée schématiquement sur la Fig. 3, au travers de laquelle le produit est refoulé par un moyen adéquat quelconque. Les orifices de la plaque 22 peuvent être généralement circulaires et d'un diamètre compris entre 5 et 50 mm et, de préférence, entre 5 et 25 mm, les éléments extrudés sortants étant généralement constitués par des filets profilés cylindriques d'un diamètre égal à celui de l'orifice. On considère qu'un diamètre d'orifice compris dans la gamme de 10 à 15 mm conviendrait pour un certain nombre de produits alimentaires ordinairement traités. Toutefois, on peut s'attendre à ce que les dimensions et formes optimales des orifices diffèrent en fonction des différents produits alimentaires. Comme illustré, le produit extrudé peut être acheminé par gravité directement dans le dispositif de congélation 10.

La phase de congélation du produit acheminé est réalisée de préférence par échange thermique direct ou indirect entre le produit alimentaire et une substance cryogénique servant de réfrigérant. Cette substance cryogénique peut être un liquide tel que de l'azote liquide ou de l'anhydride carbonique liquide ou peut prendre aussi une forme gazeuse ou solide, telle que du $CO_2$ solide sous forme de glace sèche ou de neige carbonique. Bien entendu, on peut utiliser des combinaisons de phases de ces substances cryogéniques, par exemple en injectant du $CO_2$ liquide dans une zone de congélation où il se formera un mélange de $CO_2$ gazeux et de neige carbonique solide, le produit alimentaire étant acheminé au travers de cette zone de congélation dans un certain rapport d'échange thermique avec le $CO_2$ gazeux et la neige carbonique.

L'échange thermique du produit alimentaire vers la substance cryogénique afin de réaliser la congélation dudit produit peut se faire par contact direct du produit alimentaire avec la substance cryogénique. Par exemple, si l'on se réfère à la Fig. 2, la phase de congélation du produit comprend son immersion dans un bain 30 de substance cryogénique liquide telle que de l'azote liquide afin de congeler ainsi le produit alimentaire. En variante, la phase de congélation du produit peut comprendre une pulvérisation de substance cryogénique en contact direct avec le produit pendant son passage ou son maintien dans la zone de congélation du dispositif de congélation 10. Une autre variante possible comprend le dépôt du produit alimentaire sur la substance cryogénique constituée par un lit de glace sèche de $CO_2$ solide de manière à congeler ainsi le produit.

L'utilisation d'une substance cryogénique pour la congélation est préférée car un tel système de congélation est relativement rapide en comparaison des systèmes de réfrigération mécaniques. Une telle congélation rapide est désirable afin que le produit alimentaire se congèle avant d'avoir pu s'agglomérer en gros fragments ou grumeaux.

La température à laquelle le produit alimentaire est congelé et à laquelle il sort du dispositif de congélation 10 est choisie de façon que le produit alimentaire congelé soit fragile. D'une manière générale, cette température est inférieure à celle que l'on peut obtenir avec un système de réfrigération mécanique classique. Toutefois, la température est contrôlée de préférence de telle manière que le produit alimentaire congelé sortant du dispositif de congélation 10 ne soit pas trop cassant ou émiettable. Par suite, la température doit être de préférence supérieure à la température au dessous de laquelle la cohésion naturelle du produit est insignifiante en comparaison de la force de cohésion provoquée par la cristallisation. De même, la congélation du produit à une température extrêmement basse est considérée comme un gaspillage de capacité d'extraction thermique de la substance cryogénique. La température optimale du produit alimentaire congelé au sortir de l'étage de congélation varie en fonction des différents produits. On considère que la température est comprise dans la gamme de 0 à –196°C et, pour la plupart des produits, elle est de 0 à –100°C.

Le produit de la phase de congélation du procédé et du dispositif de congélation 10 de l'installation conforme à la forme de réalisation préférée est constitué par des fragments de produits alimentaires congelés. Par exemple, dans le cas d'un produit alimentaire visqueux envoyé à l'étage de congélation sous forme d'un produit extrudé, le produit se congèle ainsi sous sa forme extrudée et par suite le flux provenant de l'étage de congélation est composé par des sections de produits alimentaires généralement cylindriques. Dans le cas de liquides ou de semi-liquides versés ou injectés dans l'étage de congélation, le flux de produit peut être constitué par de gros morceaux de produit congelé, de forme sphérique ou irrégulière. Sur la Fig. 2 où le produit est immergé dans un bain 30 de substance cryogénique liquide, le produit alimentaire congelé peut être recueilli du bain 30 au moyen d'un convoyeur à tamis 31 qui évacue le produit congelé du dispositif de congélation 10.

Le flux déchargé par l'étage de congélation peut être acheminé vers un stockage 32 (Fig. 1). Par exemple, le produit peut être emmagasiné dans des récipients et transféré vers un congélateur classique pour y être conservé pendant un temps relativement long avant un traitement ultérieur. Les congélateurs classiques maintiennent la haute fluidité du produit congelé mais la température peut être supérieure à celle où le produit est cassant. Il peut par suite être nécessaire que le stockage soit suivi d'une réduction de température afin de rendre le produit cassant pour terminer le procédé conformément à l'invention.

En variante, le flux de produit alimentaire congelé, cassant au sortir de l'étage de congélation, peut être acheminé sur un stockage temporaire 33 (Fig. 2). Un dispositif d'alimentation 34, associé au stockage temporaire 33, peut agir de manière à alimenter le produit congelé du stockage temporaire 33 au dispositif de fractionnement 35 à un débit contrôlé. Par exemple, le stockage temporaire 33 peut comporter une trémie 36, recevant le produit congelé du convoyeur 31, avec un dispositif d'alimentation 34 associé à la trémie 36. L'alimentation du produit congelé de la trémie 36 au dispositif de fractionnement 35 peut se faire par gravité, à partir d'une ouverture de décharge située à la partie inférieure de la trémie 36. Le produit peut être canalisé vers l'orifice de décharge et, afin d'éviter la formation de voûtes de produit dans la partie en entonnoir, la trémie 36 peut être vibré ou sinon soumise à des perturbations périodiques. Une grille 37 est prévue à la partie inférieure de la trémie 36 afin que les fragments congelés acheminés par gravité de l'orifice de décharge de la trémie ne dépassent pas la capacité du dispositif de fractionnement 35.

Le produit alimentaire congelé, cassant, est ensuite fractionné dans l'étage de fractionnement 35 afin de produire des particules de produit alimentaires congelé à haute fluidité. L'opération de fractionnement s'effectue sans que le produit congelé et cassant ne soit réduit en très petites particules ou fines.

Comme l'opération de fractionnement est réalisée sur un produit congelé à une température à laquelle celui-ci est rendu cassant, les particules produites par l'opération de fractionnement comprennent une proportion importante de surfaces de fractionnement dans un produit donné. Ces surfaces de fractionnement donnent un aspect agréable et appétissant dont la rétention de couleur est excellente.

Le dispositif de fracturation 35 de l'appareil objet de l'invention peut avoir la forme d'un broyeur horizontal ou vertical 40. Si l'on se réfère à la Fig. 3, le broyeur 40 comprend une cuve 41 munie des parois internes 42 et d'un noyau 43, disposé à l'intérieur de la cuve 41. Ce noyau 43 peut effectuer un mouvement relatif dans la cuve 41 afin de fractionner le produit alimentaire congelé dans l'espace 45 compris entre le noyau 43 et les parois internes 42. En particulier, la cuve 41 est, de préférence, fixe et le noyau 43 tourne ou oscille à l'intérieur. La cuve 41 est dotée d'une pluralité d'orifices de décharge à sa partie inférieure, ces orifices 46 ayant un diamètre prédéterminé et les particules 47 de produit alimentaire congelé, fractionné, d'une granulométrie inférieure au diamètre des orifices passent au travers. Grâce à cela, les fragments et particules surdimensionnés sont retenues dans l'espace 45 du broyeur de fractionnement 40 jusqu'à ce qu'elles soient fractionnées en particules de produit assez petites pour passer par les orifices 46.

Le noyau 43 du broyeur 40 se déplace ou oscille concentriquement ou excentriquement dans la cuve 41, avec une séparation minimale prédéterminée entre la surface extérieure du noyau 43 et les parois internes 42 de la cuve 41 maintenue à tout moment pendant le mouvement dudit noyau afin que le produit congelé 44 ne soit pas écrasé ou broyé en fragments de taille indésirable.

Il est donc clair que la phase de fractionnement du produit congelé 44 comprend la production de particules 47 de produit alimentaire congelé à haute fluidité, d'une granulométrie inférieure à une taille maximale prédéterminée, définie par le diamètre des orifices 46 de la cuve 41. Le procédé préféré de réalisation de l'invention comprend une phase de calibrage des particules de produit alimentaire congelé à haute fluidité dans l'étage de calibrage 50, afin de séparer les particules de taille insuffisante des fragments de plus grande taille requis pour constituer les particules de produit alimentaire final. Les particules de dimension insuffisante peuvent être recyclées pour compléter le produit à l'arrivée, soit directement, soit par l'intermédiaire d'un étage de mélangeage 16 ou après passage dans un étage de stockage 51. Bien entendu, en cas de besoin, les particules 47 de l'étage de fractionnement 35 peuvent constituer le produit final sans qu'il soit nécessaire de faire passer les particules par l'étage de calibrage 50.

Si l'on se réfère à nouveau à la Fig. 3, l'étage de calibrage 50 peut comprendre un jeu d'orifices de calibrage 52 par lequel les particules de produit alimentaire congelé et fractionné 57 venant du dispositif de fractionnement 35 sont acheminées. Le jeu d'orifices de calibrage 52 comprend des ouvertures 53 de diamètre relativement faible afin de séparer les particules de taille insuffisante 54 des particules plus grandes 55, requises pour constituer les particules finales à haute fluidité du produit alimentaire congelé.

Le jeu d'orifices de calibrage 52 peut être constitué par une grille, un tamis, une plaque à orifices ou similaire, où le flux de particules 47 passe par les ouvertures 46. En fait, ceci permet de retenir les fines. Les particules de taille insuffisante 54, peuvent être recueillies dans un récipient 56 et, comme indiqué plus haut, peuvent être recyclées et utilisées comme complément du flux de produit alimentaire initial. Grâce à l'emploi d'orifices 46 et 53 de différents diamètres, il est possible de contrôler étroitement le produit final 55 au niveau de la granulométrie des particules étant donné que les particules de taille insuffisante 54 sont recyclées pour un nouveau traitement.

Le procédé et l'appareil préférés de la présente invention, décrits plus haut, permettent d'obtenir un produit final composé de petits fragments de prodit alimentaire congelé, dur, de forme irrégulière, dont la taille est fonction du diamètre des ouvertures 46 du broyeur 40 et de la dimension des orifices 53 du jeu d'orifices de calibrage 52. On a trouvé qu'une granulométrie finale des particules comprise entre 5 et 12 mm et, de préférence entre 8 et 12 mm de diamètre en général convenait parfaitement pour un certain nombre de produits de garniture.

Le produit final 55 possède une haute fluidité et convient pour être déposé ou ajouté à l'état congelé à d'autres produits alimentaires, traités ou non traités. Ce produit à haute fluidité peut être lui-même enrobé d'autres produits alimentaires au moyen de procédés classique généraux. De même, le produit final 55 peut être conditionné sous forme d'un produit commercial, utilisé tel que à l'état congelé par les particuliers, l'industrie ou le commerce. Un exemple d'utilisation du produit final en particules consiste en son dépôt par petites portions à l'aide d'un procédé automatique sur un fond de gâteau ou de pâtisserie pré-moulé ou sur des produits similaires.

Le produit final est également apte au stockage dans son état congelé, à haute fluidité, dans des récipients appropriés, tels que bacs ou sacs plastiques pour congélateurs industriels fonctionnant à des températures généralement comprises dans la gamme de –15 à –30°C.

Le produit alimentaire initial peut être constitué par une matière première à l'état brut ou traitée, bon marché, susceptible d'être modifiée afin d'améliorer ses propriétés désirables grâce à l'incorporation d'adjuvants alimentaires appropriées tels que stabilisateurs, diluants, liants, assaisonnements etc., de telle sorte que l'on obtient un produit final équivalent ou même supérieur au produit équivalent ordinairement utilisé par l'industrie spécialisée, par exemple l'industrie de production de pizzas préfabriquées.

Il est possible d'augmenter le volume en vrac d'un produit, d'améliorer ses caractéristiques de rétention d'eau, son goût et sa couleur et de modifier ses caractéristiques de congélation afin de mieux l'adapter aux opérations de fabrication et de stockage. De même, en cas de besoin, il est possible de modifier les caractéristiques de fusion afin d'obtenir un produit amélioré après que le consommateur aura réalisé la phase de cuisson. On verra dans l'ensemble que les propriétés du produit peuvent être adaptées afin d'obtenir toute une variété de résultats finaux désirés.

L'un des exemples spécifiques de l'emploi du procédé et de l'appareil consiste dans l'emploi de pulpe d'ananas bon marché au lieu de tranches d'ananas d'un coût plus élevé, telles qu'on les emploie couramment dans les pizzas préfabriquées. L'utilisation de pulpe d'ananas bon marché permet la production de cubes d'ananas congelés, à haute fluidité.

Un autre exemple de l'emploi du procédé et de l'appareil réside dans l'utilisation de fromage traité, bon marché, de qualité inférieure, au lieu de Mozzarella d'un coût plus élevé, comme garniture pour pizzas. Le volume de ce fromage de qualité inférieure peut être augmenté au moyen de diluants, son goût peut être amélioré et certaines autres de ses propriétés peuvent être modifiées avant qu'il ne soit divisé en petites particules congelées, à haute fluidité. Ses propriétés peuvent être modifiées au point que les petites particules puissent conserver leur forme générale pendant la cuisson en n'ayant que juste le degré de fusion désiré.

D'autre exemples de l'emploi de l'invention comprennent la production de fragments de poisson congelé de bonne qualité, à haute fluidité, à partir d'une farce de poisson de qualité inférieure.

Ce procédé peut également être utilisé pour produire des fragments de fruits congelés à haute fluidité, tels que fraises, abricots, pommes, framboises, pêches, etc. à partir d'une pulpe de fruits bon marché au lieu de fruits entiers. D'autres économies peuvent également être réalisées en utilisant l'ensemble ou une partie seulement de la pulpe de pommes bon marché comme base et en ajoutant la partie nécessaire du fruit et (ou) de l'assaisonnement pour simuler un fruit particulier avant la phase de congélation et de fractionnement (réduction du produit en dés).

On peut voir que l'invention peut, d'une manière générale, relever la qualité de certains produits alimentaires bon marché et de qualité inférieure afin de les rendre commercialisables tels quels ou de les rendre même plus attractifs que certains autres produits équivalents de qualité supérieure et d'un coût plus élevé.

Il faut comprendre enfin que différentes variantes, modifications et (ou) additions peuvent être apportées à la construction et à la disposition des éléments ou phases, tels qu'ils ont été décrits, sans pour cela s'écarter de l'objet de la présente invention.

**Revendications**

1. Procédé de préparation de particules de produits alimentaires à haute fluidité dont la granulométrie est de l'ordre de quelques millimètres, comprenant l'alimentation en matière première alimentaire de consistance visqueuse ou semi-solide, sa congélation par échange direct avec une substance cryogénique, caractérisé en ce que l'on prépare d'abord par extrusion le produit alimentaire en fragments ayant une dimension minimale comprise entre 5 et 50 millimètres et de préférence entre 10 et 15 millimètres, et en ce qu'on le congèle au cœur des fragments par échange direct avec une substance cryogénique à une température suffisamment basse pour assurer la fragilisation, et en ce qu'on soumet les fragments congelés ainsi fragilisés à une opération de fractionnement par concassage puis de tamisage pour recueillir les particules ayant une granulométrie comprise entre 5 et 12 millimètres de préférence entre 8 et 12 millimètres.

2. Procédé selon la revendication 1, caractérisé en ce que la phase de congélation du produit alimentaire visqueux ou semi-solide fourni comprend l'immersion de celui-ci dans un bain de substance liquide cryogénique afin de congeler ainsi le produit alimentaire fourni.

3. Procédé selon la revendication 1, caractérisé en ce que la phase de congélation du produit alimentaire visqueux ou semi-solide fourni comprend la pulvérisation de la substance cryogénique en contact direct avec le produit alimentaire fourni au fur et à mesure qu'il passe au travers ou qu'il est maintenu dans une zone de congélation.

4. Procédé selon la revendication 1, caractérisé en ce que la phase de congélation du produit alimentaire fourni comprend la déposition du produit fourni sur une substance cryogénique solide afin de congeler ainsi le produit fourni.

5. Procédé selon la revendication 1, caractérisé en ce que le produit alimentaire est délivré à un débit contrôlé et sa surface est contrôlée de manière à permettre l'exécution de la phase de congélation du produit fourni à une vitesse prédéterminée.

6. Procédé selon la revendication 1, caractérisé en ce que le produit alimentaire est constitué par des fines d'aliments additionnées d'un agent mouillant ou d'un porteur liquide.

7. Procédé selon la revendication 1, caractérisé en ce que le produit alimentaire pâteux ou semi-solide est additionné de particules solides de même produit ou d'autres produits mélangés.

8. Procédé selon la revendication 1, caractérisé en ce que le produit alimentaire est sous forme naturelle, modifiée par incorporation d'adjuvants alimentaires appropriés tels que épaississants, stabilisants, diluants, liants, assaisonnements, conservateurs, colorants ou en mélange avec d'autres produits alimentaires.

9. Appareil servant à la préparation de produit alimentaire congelées à haute fluidité comprenant un dispositif de congélation (10) et un dispositif de fractionnement (35) caractérisé en ce que le dispositif de fractionnement (35) comprend un broyeur de fractionnement (40) comportant une cuve (41) ayant des parois internes (42) et un noyau (43) situé à l'intérieur de la cuve (41), le noyau (43) pouvant effectuer un mouvement relatif à l'intérieur de la cuve (41) de façon à broyer le produit alimentaire congelé dans l'espace (45) compris entre le noyau (43) et les parois internes (42), la cuve (41) étant dotée d'une pluralité d'orifices (46) de taille prédéterminée au travers desquels les particules (47) du produit alimentaire congelé et fractionné sont évacuées, ce qui permet ainsi de retenir les particules surdimensionnées du produit alimentaire congelé dans ledit espace situé à l'intérieur du broyeur (45).

10. Appareil selon la revendication 9, caractérisé en ce qu'un intervalle minimum de séparation prédéterminé entre la surface extérieure de noyau (43) et les parois internes (42) de la cuve (41) est maintenu à tout moment pendant le mouvement relatif du noyau à l'intérieur de la cuve, afin que le produit congelé (44) se trouvant dans ledit espace ne soit pas broyé en petites particules de taille indésirable.

11. Appareil selon la revendication 9, caractérisé en ce qu'il comprend en outre un jeu d'orifices de calibrage (52) vers lequel les particules de produit alimentaire congelé et fractionné (57) en provenance du dispositif de fractionnement (35) sont acheminées, le jeu d'orifices de calibrage (52) agissant de manière à séparer les particules de taille insuffisante (54) des particules de taille plus grande (55), destinées à constituer les particules finales à haute fluidité du produit alimentaire congelé.

**Patentansprüche**

1. Verfahren zur Herstellung von Lebensmittelproduktteilchen hoher Fliessfähigkeit, deren Korngrösse in der Grössenordnung einiger Millimeter ist, unter Einspeisen von Lebensmittelausgangsmaterial viskoser oder halbfester Konsistenz und dessen Gefrieren durch direkten Austausch mit einer cryogenen Substanz, dadurch gekennzeichnet, dass man zunächst durch Extrudieren das Lebensmittelprodukt in Bruchstücken mit einer Mindestabmessung zwischen 5 und 50 mm und vorzugsweise zwischen 10 und 15 mm herstellt und dass man es im Inneren der Bruchstücke durch direkten Austausch mit einer cryogenen Substanz mit einer genügend niedrigen Temperatur, um die Versprödung zu gewährleisten, gefriert und dass man die so gefroreren versprödeten Bruchstücke durch Grobzerkleinerung und anschliessendes Sieben, um die Teilchen mit einer Korngrösse zwischen 5 und 12 mm, vorzugsweise zwischen 8 und 12 mm, aufzufangen, fraktioniert.

2. Verfahren nach Anspruch 1, dadurch gekennzeichnet, dass die Phase des Gefrierens des angelieferten viskosen oder halbfesten Lebensmittelproduktes das Eintauchen desselben in einem Bad von flüssiger cryogener Substanz umfasst, um das angelieferte Lebensmittelprodukt so zu gefrieren.

3. Verfahren nach Anspruch 1, dadurch gekennzeichnet, dass die Phase des Gefrierens des angelieferten viskosen oder halbfesten Lebensmittelproduktes das Pulverisieren der cryogenen Substanz in direkter Berührung mit dem angelieferten Lebensmittelprodukt in dem Masse, wie es eine Gefrierzone passiert oder in ihr gehalten wird, umfasst.

4. Verfahren nach Anspruch 1, dadurch gekennzeichnet, dass die Phase des Gefrierens des angelieferten Lebensmittelproduktes die Ablagerung des angelieferten Produktes auf einer festen cryogenen Substanz, um das angelieferte Produkt so zu gefrieren, umfasst.

5. Verfahren nach Anspruch 1, dadurch gekennzeichnet, dass das Lebensmittelprodukt mit einem gesteuerten Durchsatz abgegeben wird und seine Oberfläche derart gesteuert wird, um die Ausführung der Phase des Gefrierens des angelieferten Produktes mit einer vorbestimmten Geschwindigkeit zu gestatten.

6. Verfahren nach Anspruch 1, dadurch gekennzeichnet, dass das Lebensmittelprodukt aus Lebensmittelfeinteilen besteht, die mit einem Befeuchtungsmittel oder einem flüssigen Träger versetzt sind.

7. Verfahren nach Anspruch 1, dadurch gekennzeichnet, dass das teigige oder halbfeste Lebensmittelprodukt mit festen Teilchen des gleichen Produktes oder anderen gemischten Produkten versetzt wird.

8. Verfahren nach Anspruch 1, dadurch gekennzeichnet, dass das Lebensmittelprodukt in natürlicher Form vorliegt, modifiziert durch Einarbeitung von geeigneten Lebensmittelhilfsstoffen, wie Verdickungsmitteln, Stabilisiermitteln, Verdünnungsmitteln, Bindemitteln, Würzstoffen, Konservierungsmitteln, Färbemitteln oder im Gemisch mit anderen Lebensmittelprodukten.

9. Vorrichtung zur Herstellung gefrorener Lebensmittelprodukte hoher Fliessfähigkeit mit einer Gefriereinrichtung (10) und einer Fraktioniereinrichtung (35), dadurch gekennzeichnet, dass die Fraktioniereinrichtung (35) einen Fraktionierzerkleinerer (40) mit einem Behälter (41) mit Innenwänden (42) und einem im Inneren des Behälters (41) angeordneten Kern (43) aufweist, wobei der Kern (43) eine Relativbewegung im Inneren des Behälters (41) derart bewirken kann, dass das gefrorene Lebensmittelprodukt in dem Raum (45) zwischen dem Kern (43) und den Innenwänden (42) zerkleinert wird, und dass der Behälter (41) mit mehreren Öffnungen (46) vorbestimmter Grösse ausgestattet ist, durch welche die Teilchen (47) des gefroreren und zerkleinerten Lebensmittelproduktes ausgetragen werden, was es gestattet, so die überdimensionierten Teilchen des gefrorenen Lebensmittelproduktes in dem Raum, der im Inneren des Zerkleinerers (45) angeordnet ist, zurückhalten.

10. Vorrichtung nach Anspruch 9, dadurch gekennzeichnet, dass ein vorbestimmter Mindesttrennabstand zwischen der äusseren Oberfläche des Kerns (43) und den Innenwänden (42) des Behälters (41) in jedem Augenblick während der Relativbewegung des Kerns im Inneren des Behälters aufrechterhalten wird, damit das gefrorene Produkt (44) in dem besagten Zwischenraum nicht zu kleinen Teilchen unerwünschter Grösse zerkleinert wird.

11. Vorrichtung nach Anspruch 9, dadurch gekennzeichnet, dass sie ausserdem einen Satz von Feineinstellungsöffnungen (72) aufweist, zu dem die Teilchen des gefrorenen und zerkleinerten Lebensmittelproduktes (57) von der Fraktioniereinrichtung (35) weitergeleitet werden, wobei der Satz von Feineinstellungsöffnungen (52) derart wirkt, dass die Teilchen von ungenügender Grösse (54) von den Teilchen grösserer Grösse (55), die dazu bestimmt sind, die Endteilchen von hoher Fliessfähigkeit des gefrorenen Lebensmittelproduktes darzustellen, getrennt werden.

**Claims**

1. Process for the preparation of particles of food products with high fluidity, the grain size of which is in the order of some millimeters, comprising feeding a starting food material having a viscous or semi-solid consistence, its congealing by direct exchange with a cryogenic substance, characterized in that one prepares firstly by extrusion the food product as fragments having a minimum dimension between 5 and 50 mm and preferably between 10 and 15 mm, and that one congeals internally the fragments by direct exchange with a cryogenic substance of a sufficiently deep temperature to ensure the embrittlement, and that one subjects the frozen fragments so embrittled to an operation of fractionation by crushing and then sieving to receive the particles having a grain size between 5 and 12 mm, preferably between 8 and 12 mm.

2. Process according to claim 1, characterized in that the phase of freezing the delivered viscous or semi-solid food comprises the immersion of the same in a bath of the liquid cryogenic substance to freeze the delivered food product so.

3. Process according to claim 1, characterized in that the phase of freezing the delivered viscous or semi-solid food product comprises the pulverization of the cryogenic substance in direct contact with the delivered food product in the same measure as it passes or is maintained in a freezing zone.

4. Process according to claim 1, characterized in that the phase of freezing the delivered food product comprises the deposition of the delivered product on a solid cryogenic substance to freeze the delivered product so.

5. Process according to claim 1, characterized in that the food product is supplied with a controlled throughput and its surface is controlled to permit the execution of the phase of freezing the delivered products at a predetermined velocity.

6. Process according to claim 1, characterized in that the food product consists of fines of food mixed with a wetting agent or a liquid carrier.

7. Process according to claim 1, characterized in that the pasty or semi-solid food product is mixed with solid particles of the same product or other mixed products.

8. Process according to claim 1, characterized in that the food product is in natural form modified by incorporation of suitable food adjuvants such as thickeners, stabilizers, diluants, binders, spices, preservatives, colouring agents or in admixture with other food products.

9. Apparatus for the preparation of frozen food products of high fluidity comprising a freezing means (10) and a fractionation means (35), characterized in that the fractionation means (35) comprises as fractionation crusher (40) having a container (41) with internal walls (42) and a core (43) arranged in the interior of the container (41), the core (43) being able to effect a relative movement in the interior of the container (41) to crush the frozen food product in the space (45) between the core (43) and the inner walls (42) and the container (41) being provided with a plurality of orifices (46) of predetermined size through which the particle (47) of the frozen and crushed food product are withdrawn, permitting thus to retain the super dimensioned particles of the frozen food produts in the said space arranged in the interior of the crusher (45).

10. Apparatus according to claim 9, characterized in that a predetermined minimum intervall of separation between the outher surface of the core (43) and the inner walls (42) of the container (41) is maintained at any moment during the relative movement of the core in the interior of the container, so that the frozen product (44) is in the said space not crushed to small particles of undesirable size.

11. Apparatus according to claim 9, characterized in that it comprises additionally a set of calibration orifices (52) to which the particles of the frozen and crushed food product (57) coming from the means of fractionation (35) are forwarded, the set of calibration orifices (52) working to separate the particles of insufficient size (54) from the particles of larger size (55) intended to be the final particles of high fluidity of the frozen food product.

FIG.1

FIG.2

FIG.3